# EUROPEAN PATENT APPLICATION

(11) **EP 0 655 201 A1**
(43) Date of publication of application: **31.05.1995**
(21) Application number: 94118405.3
(22) Date of filing: 23.11.1994
(51) Int. Cl.: A23B 7/148, A23B 7/154

(54) **Treatment of agricultural produce**

(30) Priority: 26.11.1993 IL 10776893
(71) Applicant: SHIRA AEROPONICS (1984) Ltd., IL-76486 Rehovot (IL)
(72) Inventor: Gonen-Levy, Gavriel, Rishon Lezion 75263 (IL); Keshet, Amiram, Rehovot 76486 (IL); Shoham, Yaacov, Kibbutz Netzer Sereni (IL)
(74) Representative: Bianchetti, Giuseppe

(57) **Abstract**

A method for the treatment of agricultural produce by generating a relatively dry fog of at least 95% humidity having an average particle size of less than 20 microns, preferably about 5 microns, and applying the fog to the produce. The fog may be applied during the storage of the produce for a period of at least several weeks, whereupon the treatment substantially reduces weight loss and decay during the storage period. The fog may include a fungicide, whereupon the treatment substantially reduces fungus-produced decay.

## Description

The present invention relates to the treatment of agricultural produce, namely fruit, vegetables and flowers, and particularly to a treatment for reducing weight loss and/or decay until the produce reaches the consumer.

Weight loss and decay caused by pathogens are two main problems involved in the storage of certain types of produce. For example, in the case of sweet potatoes, weight loss after six months storage at a relative humidity (RH) of 50-60% can reach up to 50%; and the decay can reach up to 83% in 1.5 months storage. Increasing the humidity and adding a fungicide reduces the weight loss and decay. For example storing these products at relatively high humidity, e.g., 85-90% (RH), and at temperatures of about 10°C reduces the weight loss to about 15% during six months storage, and adding a fungicide reduces decay to about 13% after 1.5 months. However, when the relative humidity increases to more than 90%, free water (condensation) starts to be concentrated on surfaces of the produce and cause dry rot diseases to develop.

An object of the present invention is to provide a method for treating such produce to further reduce weight loss and decay during storage.

According to the present invention, there is provided a method for the treatment of agricultural produce comprising: generating a relatively dry fog of at least 95% humidity having an average particle size of less than 20 microns, preferably about 5 microns, and applying the fog to the produce.

According to a further feature in the described preferred embodiments, the generated fog includes a fungicide.

It has been found that using such a fog enables the humidity to be substantially increased without causing the condensation of free water on the produce surface, such that the treatment substantially reduces weight loss and also decay, and further reduces the quantity of fungicide needed. For example, whereas in the conventional humidifying technique as applied to sweet potatoes, weight loss during a six months storge period was 15%, it was reduced to 6% when using the fog of the present invention; and whereas the amount of fungicide required was such as to produce a residue of about 2-3 ppm, this was reduced to an amount which produced a residue of about 0.09 ppm. Similar results were produced in the storage of melons, but here the fungicide was even further reduced from a residue of 3-5 ppm, to about 0.05 ppm. It will be appreciated that this substantial reduction in the amount of fungicide in the residue, approximately by two orders of magnitude, is particularly important both because of the substantial reduction in the cost of this material, but also in the substantial reduction in the health hazard presented by the presence of such a material in the produce.

The fog generator particularly useful in the method of the present invention is that described in our European Patent Application No.93630041.7. Such a fog generator was developed particularly for growing plants aeroponically, i.e., in air rather than in soil. The fog generators in such applications generate relatively dry fog of atomized water in which the average particle size is of about 5 microns, such that the fog effectively penetrates all the spaces in the roots of the plants in the aeroponic enclosure, and, if desired, all the spaces in the shoots and foliage of such plants. It has been found that such a fog generator, particularly when a fungicide is added, can produce remarkable results in decreasing weight loss and decay when the fog generated is applied before or during the storage of the produce according to the method of the present invention, as will be described more particularly below.

Further features and advantages of the invention will be apparent from the description below.

The invention is herein described, by way of example only, with reference to a number of examples set forth below, and also with respect to the accompanying drawings, wherein:
Fig. 1 is a side elevational view diagrammatically illustrating one method of treating certain types of produce, in accordance with the present invention; and
Figs. 2-5 illustrate one form of fog generator, namely that described in our European Patent Application No.93630041.7, that may be used in the method of the present invention, Fig. 2 being a three-dimensional view partly broken away, Fig. 3 being a longitudinal sectional view, Fig. 4 being a top view with parts removed, and Fig. 5 being a bottom view, of such a fog generator.

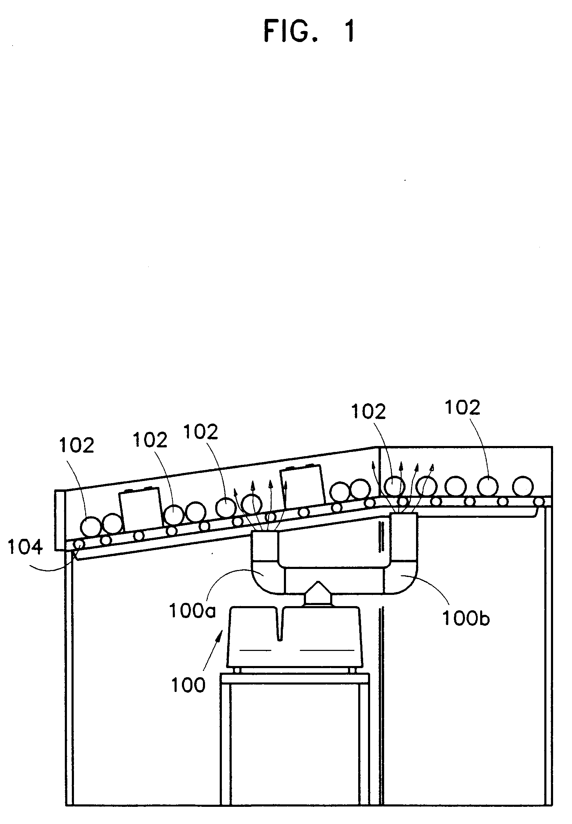

Fig. 1 diagrammatically illustrates one form of setup for treating melons M in order to reduce decay with a minimum amount of fungicide. In this method, a fog generator, generally designated 100, generates a relatively dry fog of atomized water particles containing the fungicide, the particles being of an average size of 5 microns. The melons 102 being treated are transported by a conveyor belt 104 across two longitudinally-spaced outlet ducts 100a, 100b of the fog generator 100, so as to better assure that all surfaces of the melons are subjected to the fog and fungicide applied by the fog generator 100.

As indicated earlier, the fog generator 100 generates a fog of relatively high humidity (RH), e.g., 95-98%, in which the atomized particles are of an average of 5 microns in size. Such a fog, even though of high humidity, is relatively dry, in that it produces relatively no condensation of water on the melons.

The fungicide may be one of those conventionally used for treating the produce. A preferred fungicide for melons is imazalil. It has been found that when the fungicide is applied in a fog according to the present invention, the imazalil residue in the melon tissue was reduced to about 0.05 ppm, as compared with 3-5 ppm when a conventional sprayer was used. Thus, the quantity of imazalil residue was decreased by about two orders of magnitude. This is remarkable and particularly important not only in substantially reducing the material cost, but also in reducing a health hazard.

While the method and setup illustrated in Fig. 1 were found particularly effective with respect to melons, similar results were produced when treating bell peppers, cucumbers, tomatoes, sweet potatoes and eggplants.

The invention was found particularly useful for storing sweet potatoes (Ipomoea batatas (L.) Lam) grown in Israel. As indicated earlier, the conventional treatment is to hold the roots for 5-7 days in about 88% relative humidity (RH) and at about 8°C; such sweet potatoes lost about 15% weight during a six-month storage period. However, when the curing treatment is at 12°C and by the fog generator 100, producing a high, dry humidity of 98% (RH), with an average particle size of about 5 microns, the weight loss during the six-month storage period was reduced from 15% to 6%. When the fungicide iprodione was used, decay of the sweet potatoes was reduced substantially to zero.

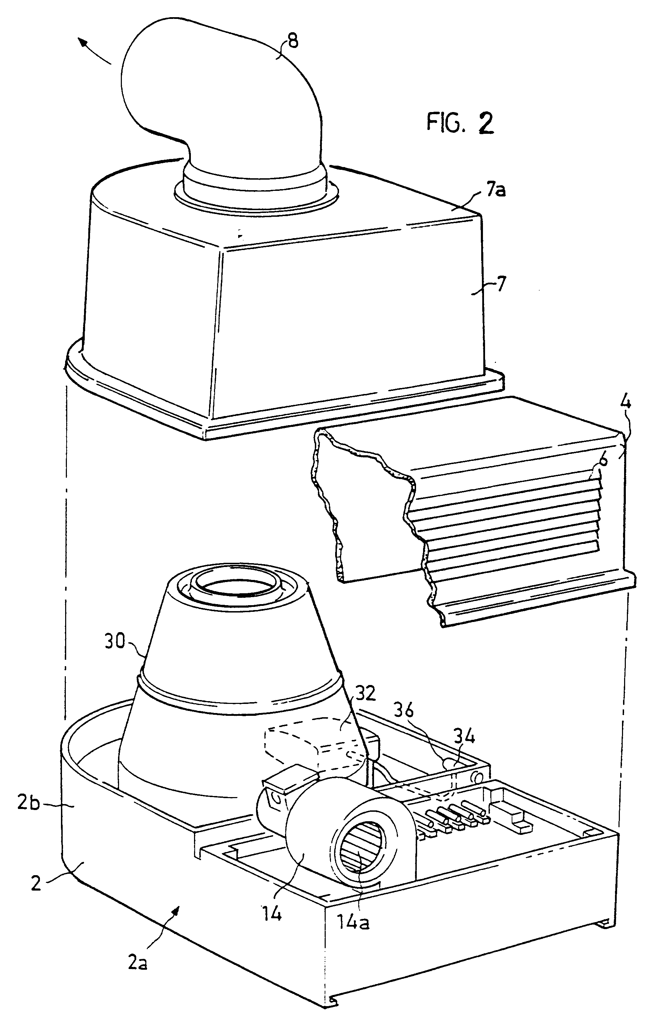

The fog generator 100 is preferably one of those described in our European Patent Application No.93630041.7. For purposes of example, one of the fog generators illustrated in that patent application is shown herein in Figs. 2-5. As indicated earlier, this is an ultrasonic fog generator which generates atomized particles of water of an average size of 5 microns, permitting the humidity to be increased from 95% to 98% with substantially no condensation of free water on the surfaces of the produce subjected to the fog.

The fog generator illlustrated in Figs. 2-5 comprises a housing, generally designated 2, constituted of two sections: an air-blower section 2a, in which a flow of air (or other gas) is generated, and a fog generator section 2b, in which a fog is generated by means of ultrasonic transducers located in that section. The air blower section 2a is closed by a cover 4 having an inlet grid 6 through which the air is drawn into the apparatus. The fog generator section 2b is closed by a cover 7 having an outlet duct 8 through which the generated fog is discharged.

Housing 2 includes a horizontal partition 10. One part 10a of this partition divides the air-blower section 2a into an upper compartment 12 containing an air blower 14, and a lower compartment 16 containing a plurality of electrical drivers 18 for a plurality of ultrasonic transducers 20 included in the fog generator section 2b. A second part 10b of partition 10 divides the fog generator section 2b of the apparatus into an upper compartment 21 including a liquid reservoir 22 of annular configuration, and a lower compartment 24 communicating directly with compartment 16 of the air-blower section 2a.

The plurality of ultrasonic transducers 20 are fixed in a circular array to partition 10, such as to be immersed in the liquid within the liquid reservoir 22. A cylindrical air duct 26 passes through partition 10 centrally of the annular liquid reservoir 22 and the array of ultrasonic transducers 20. A dome-shaped deflector 28, of semi-spherical configuration, is fixed above the outlet end of air duct 26. The open end of deflector 28 is of larger diameter than air duct 26 such that the inner surface of the open end of the deflector projects outwardly of the air duct and overlies the inner end of the annular liquid reservoir 22. A conically-shaped outlet duct 30 is secured to the housing section 2b, with the larger-diameter end of the duct circumscribing the ultrasonic transducers 20 and overlying the outer end of the annular liquid reservoir 22. The outer, smaller-diameter end 30b of duct 30 is spaced below the upper end 7a of cover 7, to which is secured a cylindrical outlet duct 8, as shown in Fig. 2, for discharging the generated fog.

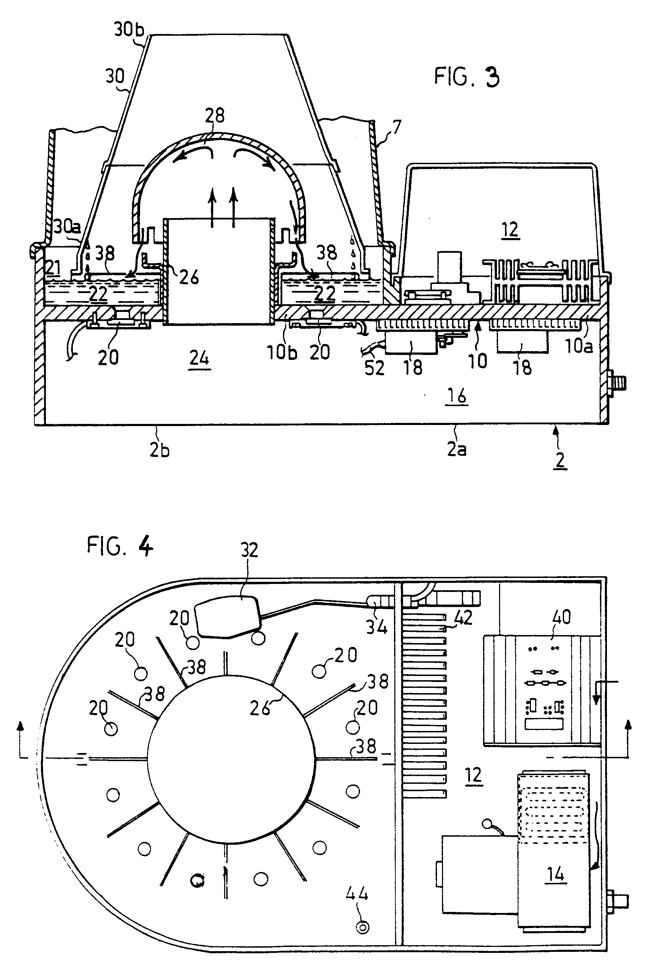

The liquid within the annular reservoir 22 is maintained at a constant level by a float 32 operating a valve 34 controlling the inletting of the water via an inlet tube 36 (Figs. 2 and 4). Float 32 maintains the liquid at the optimum level within reservoir 22 to immerse all the ultrasonic transducers 20 which, when energized by their drivers 18, atomize the liquid. An annular array of baffles 38, fixed to partition 10 in the spaces between the ultrasonic transducers 20 and projecting above the level of the liquid within the reservoir 22, acts as barriers suppressing the formation of waves in the liquid when the blower 14 and the ultrasonic transducers 20 are operated.

Compartment 12, including the air blower 14, may also include a power supply 40 (Fig. 4) and a plurality of fuses 42 These electrical components, as well as the drivers 18 for the ultrasonic transducers 20 in compartment 16, are cooled by the air flow produced by blower 14. A reed switch 44 (Fig. 4) is floatingly mounted to turn-off the power supply, should the water level in the reservoir 22 drop below a minimum value, to protect the ultrasonic transducers 20.

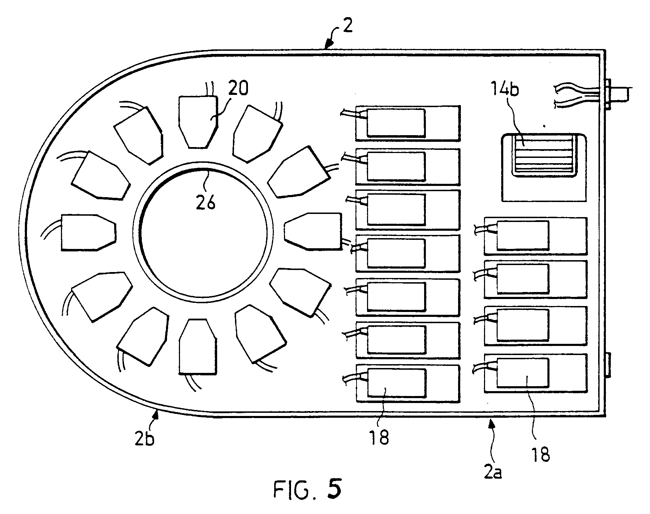

The fog generator illustrated in Figs. 2-5 operates as follows:
When air blower 14 is energized, it draws air via the inlet grid 6 in cover 4, causing the air to pass over the power supply 40 and the fuses 42 before reaching inlet 14a (Fig. 1) of the air blower. The air is discharged from the air blower through an outlet opening 14b (Fig. 5) in partition 10, into the lower compartment 16, and is circulated over the ultrasonic transducer drivers 18 before being directed to compartment 24 underlying the fog generator section 2b of the housing.

The air is passed through the inlet duct 26 centrally of the annular reservoir 22 and the circular array of ultrasonic transducers 20 immersed in the liquid in that reservoir. As shown by the arrows in Fig. 3, the air is then deflected by the inner surface of the dome-shaped deflector 28 back towards the liquid level within reservoir 22, and then transversely across the reservoir so as to become intimately mixed with the liquid atomized by the ultrasonic transducers 20. Baffles 38 between the ultrasonic transducers suppress the formation of waves.

The operation of the ultrasonic transducers 20 directs the atomized liquid upwardly towards the inner surface of the conical duct 30. Heavy particles of liquid tend to coalesce on the inner surface of the duct and drip back into reservoir 22, whereas the lighter particles, intimately mixed with the air, pass through the outlet opening 30b of duct 30 and through the cylindrical outlet duct 8.

Following is an example of using such a fog generator. The fungicide is preferably mixed in the water in an amount of about 4,000 ppm by weight. The mixture is preferably atomized at a rate of five liters/hour.

For treating sweet potatoes, the fungicide is preferably iprodone (Rovral, 0.1% active ingredient). The generated fog produces a relatively dry humidity of 95-98% with a particle size of about 5 microns. It is used as a curing treatment for the sweet potatoes by holding their roots for 5-7 days at this high humidity and at a storage temperature of 12°C. Such a treatment was found to reduce the weight loss after three months from about 15% to about 4%, and to substantially eliminate decay caused by pathogens. In addition, the fungicide residue in the complete sweet potato tissue was found to be reduced to about 0.09 ppm, as compared to about 2-3 ppm residue when using a conventional sprayer.

For treating melons, the fungicide is preferably imazalil applied as described above. The residue in the melon tissue was found to be reduced to about 0.5 ppm as compared to about 3-5 ppm when a conventional sprayer is used. Virtually all the residue was found in the peel, and significantly no residue was found in the edible part.

Similar results were produced when so-treating bell peppers, cucumbers, tomatoes and eggplants.

## Claims

1. A method for the treatment of agricultural produce comprising: generating a relatively dry fog of at least 95% humidity having an average particle size of less than 20 microns, preferably about 5 microns, and applying said fog to the produce.

2. The method according to Claim 1, wherein said fog is applied during the storage of the produce for a period of at least several weeks, said treatment being effective to substantially reduce weight loss and decay during said storage period.

3. The method according to Claim 1, wherein said fog includes a fungicide, said treatment being effective to substantially reduce fungus-produced decay.

4. The method according to Claim 3, wherein said fungicide is present in an amount by weight to produce a residue which is less than 0.3 parts per million (ppm).

5. The method according to Claim 3, wherein said fungicide is present in an amount by weight to produce a residue which is less than 0.1 ppm.

6. The method according to any one of Claims 3-5, wherein said fungicide is iprodione.

7. The method according to Claim 6, wherein said produce is sweet potatoes.

8. The method according to any one of Claims 3-5, wherein said fungicide is imazalil.

9. The method according to Claim 8, wherein said produce is melons.

10. The method according to any one of Claims 3-9, wherein said fog is produced by an ultrasonic fog generator from a mixture of said fungicide in water, said mixture includes said fungicide in an amount of about 4000 parts per million (ppm) by weight and being generated at a rate of about 4000 liters/hour.
